# EUROPEAN PATENT SPECIFICATION

(11) **EP 2 130 021 B1**
(45) Date of publication and mention of the grant of the patent: **21.08.2013**
(21) Application number: 08718983.3
(22) Date of filing: 04.04.2008
(51) Int. Cl.: G01M 13/02

(54) **PITCH LINE RUN-OUT DETECTION APPARATUS**
TEILKREIS-AUSLAUFSDETEKTIONSVORRICHTUNG
DISPOSITIF DE DÉTECTION D'EXCENTRICITÉ PAR LIGNE DE PAS

(30) Priority: 05.04.2007 GB 0706761
(43) Date of publication of application: 09.12.2009
(73) Proprietor: Anthony Best Dynamics Limited, Bradford on Avon, Wiltshire BA15 1AJ (GB)
(72) Inventor: FOSTER, Anthony, Charles, Bath BA2 4PT (GB); RUMBLE, Andrew, Walter, Melksham Wiltshire SN12 8ND (GB)
(74) Representative: Brooks, Nigel Samuel
(86) International application number: PCT/GB2008/001178
(87) International publication number: WO 2008/122772

(56) References cited:
- DE-A1- 1 427 263
- US-A- 3 580 068
- US-A- 4 872 337

## Description

The present invention relates to apparatus and method for detecting pitch line run out of a gear set.

Two meshing gears are designed to have a constant gear ratio, i.e. the ratio of their rotational speeds. Gears are often considered with reference to two dimensional geometry. Thus, their points of contact are said to follow a line at right angles to the line between the centres of the gears. The ratio of the radii from the respective centres is equal to the nominal gear ratio. The circles corresponding to these radii are referred to as the pitch circles.

In practice, gear wheels may be incorrectly manufactured with eccentricity between the pitch circle and the centre of the gear wheel, in practice the machined bore of the gear wheel, or equivalent journal surface. When such an eccentric gear is meshed with another gear, whether the latter is eccentric or not, the point of contact between the teeth of the gears (when this point is on the line between their centres of rotation) will not be at the ideal point, namely the intersection of the pitch circle diameters of the two gears. Rather the point of contact will move cyclically towards one gear and then towards the other gear with the respective eccentricities. The points of contact of each gear cease to be in accordance with their designed pitch circles and describe an eccentric circle. These gears are said to experience pitch line run out.

A consequence of pitch line run out, which involves the line of contact moving towards the centre of one gear and then the centre of the other, is instantaneous change in the ratio between the gears. This in turn results in undesirable cyclic fluctuations in the noise produced by the gears - cyclic fluctuations of noise being more noticeable and annoying than steady noise.

In the field of noise and vibration analysis, a well known mathematical technique is the Fourier transform. A Fourier transform is a mathematical analysis of a function, generally a function with time. It transforms the function into a series of sine waves having magnitudes and frequencies such that when they are added together, they reproduce the function being analysed. Often the sine waves comprise a fundamental frequency and a set of harmonics of this frequency. A simple formula for the Fourier series on which the Fourier transform is based is:
The sum from n=1 to n=∞ of aₙsin nx
   Where the function has cyclic constituents, these will be reproduced in the Fourier transform as substantial magnitudes *aₙ* associated with the multiple n of the fundamental frequency corresponding to the frequency of the cyclical component, in comparison with the magnitudes for close by multiples. Thus a plot of the magnitudes against frequency will show the frequency of the cyclical component (or its fundamental frequency and its harmonics where it is of this type).

In practical terms, where the noise or vibration being analysed is caused by rotating machinery, it is useful to normalise this analysis to a reference frequency and plot the magnitudes against fractions and multiples of the reference frequency. Such normalisation is known as order analysis. The reference is normally a signal synchronised to the rotation of a shaft in the machinery.

Normalisation of a plot of the Fourier coefficients, namely magnitudes *aₙ* associated with the multiple n of the fundamental frequency, converts the plot from a frequency basis to a multiple basis, namely division of the frequency scale by a particular frequency to give harmonic numbers - i.e. orders *o*, which frequency can be expected to be associated with the function being analysed, and results in a plot having magnitudes *aₙ* at particular multiples *oₙ* of the cyclic event giving rise to the particular cyclic function being analysed. In practice non-integer multiples *n* and including multiples less than 1 are found to be useful.

There has been a long felt need for a simple means of detecting pitch line run out. However, it will be appreciated that gears are complex three dimensional items that are not readily measured quickly. Gear testing systems are known e.g. from US 3,580, 068 and US 4,872,337.

The object of the present invention is to provide an improved apparatus for detecting pitch line run out of a gear set

According to the invention there is provided apparatus for detecting pitch line run out of a gear set comprising:
- means for supporting the gear set or a housing including the gear set, with the gears meshed;
- means for rotating the gears of the gear set and loading them with a torque representative of in use load on them;
- means for measuring the respective instantaneous rotational velocities of the
   gears;
- means for computing the ratio of the instantaneous rotational velocities as the instantaneous ratio information and
- means for computing a measure of pitch line run out of the gears of the gear set, from the instantaneous ratio information.

According to another aspect of the invention, there is provided a method of detecting pitch line run out of a gear set, the method consisting in the steps of:
- setting up the gear set with means for rotating the gears and means for measuring the respective instantaneous rotational velocities of the gears;
- rotating the gears under load and measuring their respective instantaneous velocities; and
- computing a measure of pitch line run out of the gears of the gear set, from the instantaneous rotational velocities, including the step of computing the ratio of the instantaneous rotational velocities as the instantaneous ratio information.

Normally transform analysis, conveniently Fourier transform analysis and order analysis will be carried out, whereby an eccentric one of the gears of the gear set can be identified.

To help understanding of the invention, a specific embodiment thereof will now be described by way of example and with reference to the accompanying drawings, in which:
Figure 1 is a diagrammatic view of pitch line run out detection apparatus of the invention
Figure 2 is a graph of instantaneous gear ratio as measured;
Figure 3 is a graph of the orders o and magnitudes aₒ of a Fourier analysis of the instantaneous gear ratio.

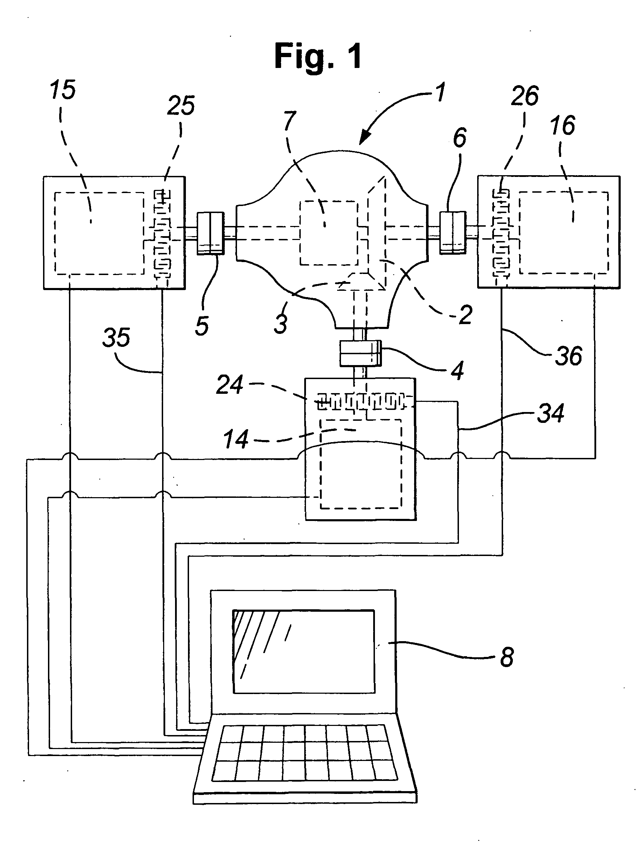

Referring to the drawings, in Figure 1, a gear set 1 under test having a crown wheel or ring gear 2 and pinion 3 - both shown in outline only - an input shaft and flange 4 and two output shafts and flanges 5,6 is connected at the flanges to load motors 14, 15, 16. These can drive to apply driving load i.e. torque or be driven applying braking load i.e. torque and are each equipped with pulse producing transducers 24, 25, 26. The gear set shown is an automotive final drive unit and as such the output flanges are interconnected by a differential 7. Where the unit is comparatively lightweight, it can be supported by the load motors, which are adjustable on a chassis - not shown - for movement into supporting engagement at the flanges. Alternatively, the unit can be supported directly on the chassis via conventional mounting brackets - not shown - on its housing.

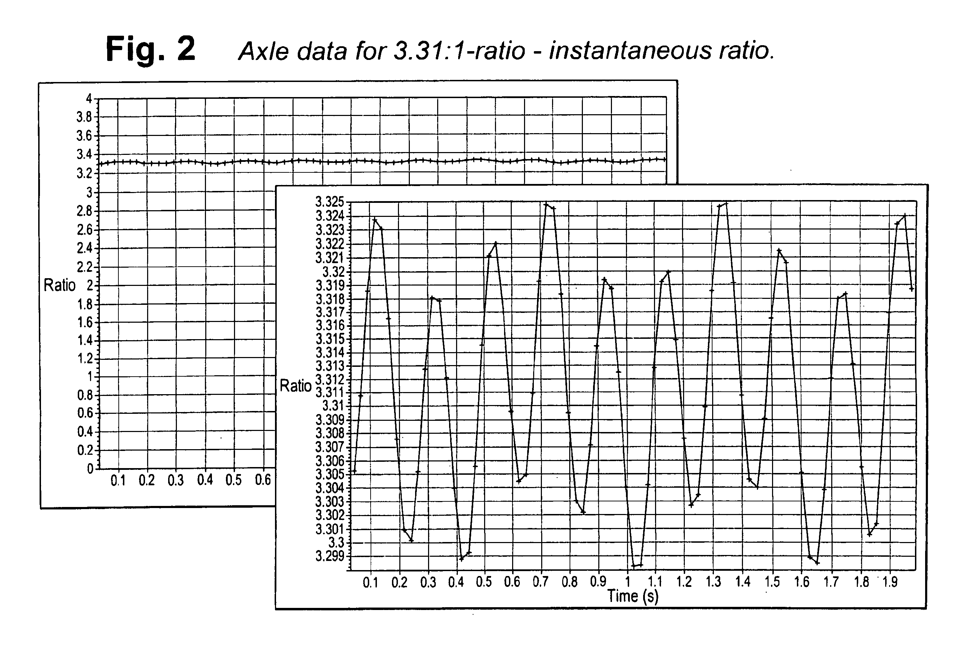

The transducers, typically binary encoders produce a stream of pulses, typically 64 to 512 per revolution, which are fed on lines 34, 35, 36 to a computer 8 programmed to accept the pulse information and convert it to instantaneous rotational speed information. The information for the two output shafts will normally be cyclically averaged whereby comparative instantaneous speed information is available for the crown wheel and the pinion. The ratio of the instantaneous speed information is computed as the instantaneous ratio information shown in Figure 2.

Our experience is that if the encoder on the slower shaft produces 256 pulses per revolution and that shaft is rotated 10 to 20 times, sufficient information is likely to be available for reliable analysis.

If the pinion has eccentricity, the average ratio over one revolution of it will be the nominal ratio of the gear set, assuming that the crown wheel is concentric within tolerance. However there will be a sinusoidal change in ratio superimposed on the average ratio. Where the eccentricity causes the pitch circle radius of the pinion to be a minimum, it will drive the crown wheel more slowly and the gear ratio will be larger. Spaced 180° around the pinion, the radius will be a maximum and the ratio will be a minimum. It will be appreciated how this gives rise to the sinusoidal change.

The change can be detected and quantified by performing a Fourier transform on the instantaneous ratio signal. If the rotational frequency of either gear - or both - in the gear set predominates in the transform, then that gear - or both - can be predicated to be eccentric.

Thus the instantaneous gear ratio is calculated as a signal which is variable in the time domain as a result of the pitch line run out. By carrying out a Fourier transform on this signal, using digitisation of the signal in synchronisation with rotation of one of the shafts, preferably the input shaft, an order spectrum is produced directly without any need to consider the frequency domain. From this spectrum the components relating to pinion and crown wheel run out can be extracted.

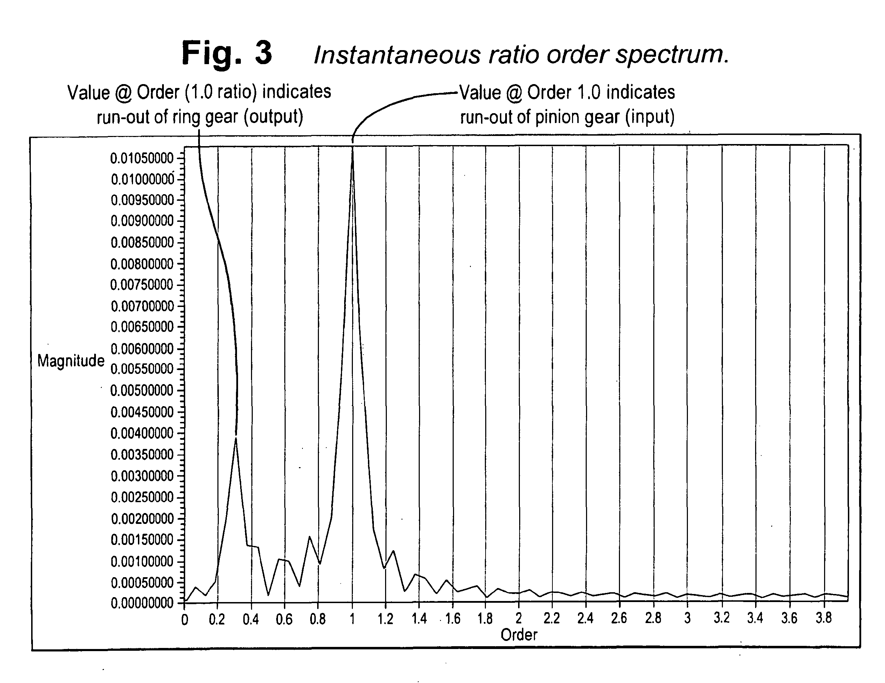

Accordingly the computer is programmed to display orders magnitudes *oₙ* against orders *o*, also known as an order spectrum. In the case shown in Figure 3, which is based on the ratio of the pinion's rotations with respect to the crown wheel's (as.opposed to the inverse), magnitude peaks occur at orders 0.3 and 1.0 for a gear set having a 3.3:1 ratio. The magnitudes of these peaks give a measure of the pitch line run out of the gear wheels. The relative size of the peaks in comparison to acceptable peaks for the gears themselves in known applications enables GO/NO-GO tests to be developed. For instance it may be that a pinion having 0.25mm of eccentricity meshing with a truly concentric crown wheel is on the border line of acceptability in terms of cyclic noisy generated in practice. When this pinion, and in practice a series of like pinions, are tested in the apparatus described, they will generate a certain magnitude M₁ at order 1.00. This then allows a NO-GO criterion to be established. This process can be automated, accepting or rejecting the gear wheels on the gears on the basis of their pitch line run out.

As shown in Figure 3, the peak at order 0.3 (order 1.00 divided by the gear ratio of the gear) indicates eccentricity both of the slower rotating crown wheel. Similar GO/NO-GO tests can be established for the crown wheel.

Eccentricity is not the only possible fault with gears. They can suffer from ovality. This causes a twice per revolution cyclic effect and a peak in the order spectrum at order 2.0 if it is the pinion that is at fault or at 0.6 if the crown wheel is at fault, with the ratio of the gear set being 3.3:1.

Since the load motors 14, 15, 16 are of the type which can drive or be driven, the testing can be done with the pinion driving the crown wheel in the normal driving mode for the gear set, or with the crown wheel driving the pinion in the over-run mode.

Normally, the driven one(s) of the motors will be set to act as brakes so the driving one(s) can apply typical loads to the gears. However, it should be noted that the eccentricity or other faults are not expected to be speed dependent and the testing can be carried out at speeds lower than normal operating speeds.

The invention is not intended to be restricted to the details of the above described embodiment. For instance, whilst the embodiment has been described in respect of an assembled gear set, individual gear wheels can be tested by incorporating them into a set of two gears, where the other gear is a known to be a concentric standard gear. Any significant magnitude in the order spectrum of the instantaneous gear ratio is a measure of significant pitch line run out, which indicates a fault with the gear under test. Such tests can be carried out after hobbing of gears and after honing. In appropriate cases, they will enable gearwheels to be rectified as opposed to scrapped.

Again, the invention is applicable to multiple gear sets. For instance a complete automotive gearbox can be tested. It is to be expected that different order values will be associated with eccentricity of different pairs of gearwheels, due to their unique number of teeth in the gear set. It may be necessary to temporarily fit a transponder to the lay shaft and treat the gear box as two gear sets in series. It will be appreciated that higher levels of eccentricity will be acceptable for infrequently used gear pairs, such as the first gear pair, in comparison with frequently used gear pairs such as the input to layshaft pair and any over-drive top pairs.

Further, measurements in accordance with the invention can be applied to gear lapping machines to measure pitch line run out during lapping and enable correction of the problem. Also it can be applied to hobbing or grinding machines to enable excessive pitch line run out to be detected at an early stage in the process and allow the process to be halted to minimise time that would otherwise be wasted in producing defective products.

## Claims

1. Apparatus for detecting pitch line run out of a gear set comprising:
• means for supporting the gear set, or a housing including the gear set, with the gears meshed;
• means for rotating the gears of the gear set and loading them with a torque representative of in use load on them;
• means for measuring the respective instantaneous rotational velocities of the gears;
**characterised by**
• means for computing the ratio of the instantaneous rotational velocities as the instantaneous ratio information; and
• means for computing a measure of pitch line run out of the gears of the gear set, from the instantaneous ratio information.

2. Detection apparatus as claimed in claim 1, wherein the gear supporting means is a fixture for a housing including the gear set.

3. Detection apparatus as claimed in claim 1, wherein the gear supporting means is a set of flanges on input and output shafts of the gear set.

4. Detection apparatus as claimed in claim 1, wherein the gear supporting means comprises a rotary support for each gear.

5. Detection apparatus as claimed in any preceding claim, wherein the gear rotation and load means is a driving load motor for driving one gear of the set.

6. Detection apparatus as claimed in claim 5, wherein the gear rotation and load means is a braking load motor for braking another gear of the set.

7. Detection apparatus as claimed in claim 5 or claim 6, wherein the rotational velocity measuring means comprises a respective rotary transducer in the or each motor.

8. Detection apparatus as claimed in claim 7, wherein the or each rotary transducer is a binary encoder.

9. Detection apparatus as claimed in any preceding claim, wherein the computing means is adapted to perform a transform and order analysis on the instantaneous rotational velocities.

10. Detection apparatus as claimed in claim 9, wherein the computing means is adapted to perform a GO/NOGO test in accordance with the size of the peaks in the order analysis, indicating GO if the peak is smaller than a predetermined threshold and NOGO if the peak is higher that the predetermined threshold.

11. Detection apparatus as claimed in claim 10, wherein the computing means is adapted to indicate GO or NOGO in respect of the individual gears of the set in accordance with the heights of individual peaks occurring at predetermined orders.

12. A method of detecting pitch line run out of a gear set, the method consisting in the steps of:
• setting up the gear set with means for rotating the gears and means for measuring the respective instantaneous rotational velocities of the gears;
• rotating the gears under load and measuring their respective instantaneous velocities; and
• computing a measure of pitch line run out of the gears of the gear set, from the instantaneous rotational velocities, including the step of computing the ratio of the instantaneous rotational velocities as the instantaneous ratio information.

13. A detection method as claimed in claim 12, wherein:
• the gear set is an automotive differential having an input shaft, a pinion on the input shaft, crown wheel or ring gear, a differential driven by the crown wheel and two output shafts from the differential and
• the computing step includes cyclic averaging for the instantaneous velocities of the two output shafts for detecting the pitch line run out of the crown wheel and pinion.

14. A detection method as claimed in claim 12 or claim 13, wherein the means for measuring the instantaneous velocity of a slower one of the gear sets produces at least 256 pulses per revolution and the rotation thereof is performed over at least 10 revolutions.

15. A detection method as claimed in claim 12, claim 13 or claim 14, wherein the computing means is adapted to perform a transform and order analysis on the instantaneous rotational velocities.

16. A detection method as claimed in claim 15, wherein the computing means is adapted to perform a GO/NOGO test in accordance with the size of the peaks in the order analysis, indicating GO if the peak is smaller than a predetermined threshold and NOGO if the peak is higher that the predetermined threshold.

17. A detection method as claimed in claim 16, wherein the computing means is adapted to indicate GO or NOGO in respect of the individual gears of the set in accordance with the heights of individual peaks occurring at predetermined orders.

18. A detection method as claimed in any one of claims 12 to 17, wherein the method is performed after hobbing of the gears of the set.

19. A detection method as claimed in any one of claims 12 to 17, wherein the method is performed after honing of the gears of the set.

20. A detection method as claimed in any one of claims 12 to 17, wherein the method is performed after grinding of the gears of the set.

## Patentansprüche

1. Vorrichtung zum Ermitteln einer Wälzbahn-Abweichung eines Zahnradsatzes, mit:
• einer Lageranordnung zur Aufnahme des Rädersatzes oder einem den Rädersatz aufnehmenden Gehäuse, wobei die Zahnräder im Eingriff miteinander sind;
• Mitteln zum Drehen der Zahnräder des Rädersatzes und zur Belastung mit einem Moment, dass repräsentativ für die auf sie wirkende Belastung im Gebrauchszustand ist;
• Mitteln zum Messen der jeweiligen Momentan-Drehgeschwindigkeiten der Zahnräder;
**gekennzeichnet durch**
• Mittel zum Kalkulieren des Verhältnisses der Momentan-Drehgeschwindigkeiten als Momentan-Verhältniswert; und
• Mittel zum Bestimmen eines Maßes der Wälzbahn-Abweichung der Zahnräder des Rädersatzes aus dem Momentan-Verhältniswert.

2. Detektionsvorrichtung nach Anspruch 1, **dadurch gekennzeichnet, dass** die Lageranordnung eine Halterung für ein Gehäuse ist, das den Rädersatz aufnimmt.

3. Detektionsvorrichtung nach Anspruch 1, **dadurch gekennzeichnet, dass** die Lageranordnung ein Satz Anschlussflansche an Eingangs-und Ausgangswellen des Rädersatzes ist.

4. Detektionsvorrichtung nach Anspruch 1, **dadurch gekennzeichnet, dass** die Lageranordnung eine Drehaufnahme für jedes Zahnrad aufweist.

5. Detektionsvorrichtung nach einem der vorstehenden Ansprüche, **dadurch gekennzeichnet, dass** das Räderantriebs- und Lasteinleitungsmittel ein antreibender Lastmotor für den Antrieb eines der Zahnräder des Satzes ist.

6. Detektionsvorrichtung nach Anspruch 5, **dadurch gekennzeichnet, dass** das Räderantriebsund Lasteinleitungsmittel ein bremsender Lastmotor zum Bremsen eines anderen Zahnrads des Satzes ist.

7. Detektionsvorrichtung nach Anspruch 5 oder Anspruch 6, **dadurch gekennzeichnet, dass** die Drehgeschwindigkeit-Messmittel ein zugehöriges Messgetriebe an dem Motor oder jedem der Motoren aufweisen.

8. Detektionsvorrichtung nach Anspruch 7, **dadurch gekennzeichnet, dass** das oderjedes Messgetriebe einen Binär-Impulsgeber umfasst.

9. Detektionsvorrichtung nach einem der vorstehenden Ansprüche, **dadurch gekennzeichnet, dass** die Recheneinrichtung ausgebildet ist, um eine Umwandlungs- und Ordnungsanalyse über die Momentan-Drehgeschwindigkeiten auszuführen.

10. Detektionsvorrichtung nach Anspruch 9, **dadurch gekennzeichnet, dass** die Recheneinrichtung ausgebildet ist, um einen BESTANDEN/NICHT-BESTANDEN Test in Abhängigkeit von der Höhe der Spitzen in der Ordnungsanalyse durchzuführen, wobei der Wert BESTANDEN angezeigt wird, wenn die Spitze kleiner als ein vorgegebener Schwellenwert ist und der Wert NICHT-BESTANDEN angezeigt wird, wenn die Spitze größer ist als der vorgegebene Schwellenwert.

11. Detektionsvorrichtung nach Anspruch 10, **dadurch gekennzeichnet, dass** die Recheneinrichtung ausgebildet ist, die Ergebnisse BESTANDEN oder NICHT-BESTANDEN in Bezug auf die einzelnen Zahnräder des Rädersatzes in Übereinstimmung mit den Höhen der individuellen Spitzen auszugeben, die bei vorbestimmten Aufträgen auftreten.

12. Verfahren zum Ermitteln einer Wälzbahn-Abweichung eines Zahnradsatzes, wobei das Verfahren die Schritte aufweist:
• Anordnen des Radsatzes mit Mitteln zum Drehen der Zahnräder und Mitteln zum Feststellen der jeweiligen Momentan-Drehgeschwindigkeiten der Zahnräder;
• Drehen der Zahnräder unter Last und Messen ihrer jeweiligen Momentangeschwindigkeiten; und
• Bestimmen eines Werts für die Wälzbahn-Abweichung der Zahnräder des Rädersatzes aus den Momentan-Drehgeschwindigkeiten, unter Einschluss eines Schritts, bei dem das Verhältnis der Momentan-Drehgeschwindigkeiten als Momentan-Verhältniswert bestimmt wird.

13. Detektionsverfahren nach Anspruch 12, **dadurch gekennzeichnet, dass**:
• der Zahnradsatz ein Fahrzeug-Ausgleichsgetriebe mit einer Eingangswelle, einem Kegelrad auf der Eingangswelle, einem Kronrad oder Tellerrad, einem davon angetriebenen Differenzial und zwei Ausgangswellen am Differenzial ist, und
• die Berechnung eine zyklische Durchschnittsbestimmung für die Momentangeschwindigkeiten der beiden Ausgangswellen beinhaltet, um die Wälzbahn-Abweichung von Kronrad und Kegelrad festzustellen.

14. Detektionsverfahren nach Anspruch 12 oder Anspruch 13, **dadurch gekennzeichnet, dass** die Mittel zum Messen der Momentangeschwindigkeit eines langsameren der Zahnräder wenigstens 256 Pulse pro Umdrehungen erzeugt und die Drehung von diesem über wenigstens zehn Umdrehungen durchgeführt wird.

15. Detektionsverfahren nach Anspruch 12, Anspruch 13 oder Anspruch 14, **dadurch gekennzeichnet, dass** die Recheneinrichtung ausgebildet ist, um eine Umwandlungs- und Ordnungsanalyse über die Momentan-Drehgeschwindigkeiten auszuführen.

16. Detektionsverfahren nach Anspruch 15, **dadurch gekennzeichnet, dass** die Recheneinrichtung ausgebildet ist, um einen BESTANDEN/NICHT-BESTANDEN Test in Abhängigkeit von der Höhe der Spitzen in der Ordnungsanalyse durchzuführen, wobei der Wert BESTANDEN angezeigt wird, wenn die Spitze kleiner als ein vorgegebener Schwellenwert ist und der Wert NICHT-BESTANDEN angezeigt wird, wenn die Spitze größer ist als der vorgegebene Schwellenwert.

17. Detektionsverfahren nach Anspruch 16, **dadurch gekennzeichnet, dass** die Recheneinrichtung ausgebildet ist, die Ergebnisse BESTANDEN oder NICHT-BESTANDEN in Bezug auf die einzelnen Zahnräder des Rädersatzes in Übereinstimmung mit den Höhen der individuellen Spitzen auszugeben, die bei vorbestimmten Aufträgen auftreten.

18. Detektionsverfahren nach einem der Ansprüche 12 bis 10, **dadurch gekennzeichnet, dass** das Verfahren nach dem Wälzfräsen der Zahnräder des Satzes ausgeführt wird.

19. Detektionsverfahren nach einem der Ansprüche 12 bis 17, **dadurch gekennzeichnet, dass** das Verfahren nach dem Honen der Zahnräder des Satzes ausgeführt wird.

20. Detektionsverfahren nach einem der Ansprüche 12 bis 17, **dadurch gekennzeichnet, dass** das Verfahren nach dem Schleifen der Zahnräder des Satzes ausgeführt wird.

## Revendications

1. Dispositif pour détecter l'excentricité des lignes primitives d'un train d'engrenages, comprenant :
· un moyen de support du train d'engrenages, ou d'un boitier comprenant le train d'engrenages, avec les roues dentées engrenées ;
· un moyen pour faire tourner les roues dentées du train d'engrenages et les charger avec un couple représentatif de la charge qu'elles subissent en cours d'utilisation ;
· un moyen de mesure des vitesses de rotation instantanées respectives des roues dentées ;
**caractérisé par** :
· un moyen de calcul du ratio des vitesses de rotation instantanées en tant qu'information de ratio instantané ; et
un moyen de calcul d'une mesure de l'excentricité des lignes primitives des roues dentées du train d'engrenages, à partir de l'information de ratio instantané.

2. Dispositif de détection selon la revendication 1, dans lequel le moyen de support des roues dentées est un accessoire pour un boitier incluant le train d'engrenages.

3. Dispositif de détection selon la revendication 1, dans lequel le moyen de support des roues dentées est un jeu de flasques sur des arbres d'entrée et de sortie du train d'engrenages.

4. Dispositif de détection selon la revendication 1, dans lequel le moyen support des roues dentées comprend un support rotatif pour chaque roue dentée.

5. Dispositif de détection selon l'une des revendications précédentes, dans lequel le moyen pour faire tourner et pour charger les roues dentées est un moteur de charge d'entrainement pour entrainer l'une des roues dentées du train.

6. Dispositif de détection selon la revendication 5, dans lequel le moyen pour faire tourner et charger les roues dentées est un moteur de charge de freinage pour freiner une autre roue dentée du train.

7. Dispositif de détection selon la revendication 5 ou la revendication 6, dans lequel le moyen de mesure de la vitesse de rotation comprend un transducteur rotatif respectif dans le moteur ou dans chaque moteur.

8. Dispositif de détection selon la revendication 7, dans lequel le transducteur ou chaque transducteur rotatif est un codeur binaire.

9. Dispositif de détection selon l'une des revendications précédentes, dans lequel le moyen de calcul est apte à effectuer une transformation et une analyse d'ordre sur les vitesses de rotation instantanées.

10. Dispositif de détection selon la revendication 9, dans lequel le moyen de calcul est apte à effectuer un test GO/NOGO en fonction de la dimension des pics de l'analyse d'ordre, indiquant GO si le pic est plus petit qu'un seuil prédéterminé et NOGO si le pic est plus élevé au seuil prédéterminé.

11. Dispositif de détection selon la revendication 10, dans lequel le moyen de calcul est apte à indiquer GO ou NOGO à l'égard des roues dentées individuelles du train en fonction des hauteurs des pics individuels survenant à des ordres prédéterminés.

12. Un procédé de détection de l'excentricité des lignes primitives d'un train d'engrenages, ce procédé étant constitué par les étapes suivantes :
· installation sur le train d'engrenages d'un moyen pour entrainer en rotation les roues dentées et d'un moyen pour mesurer les vitesses de rotation instantanées respectives des roues dentées ;
· mise en rotation des roues dentées sous charge et mesure de leurs vitesses instantanées respectives ; et
· calcul d'une mesure de l'excentricité des lignes primitives des roues dentées du train d'engrenages, à partir des vitesses de rotation instantanées, incluant l'étape de calcul du ratio des vitesses de rotation instantanées en tant qu'information de ratio instantané.

13. Un procédé de détection selon la revendication 12, dans lequel :
le train d'engrenages est un différentiel automobile avec un arbre d'entrée, un pignon sur l'arbre d'entrée, une couronne ou une roue dentée annulaire, un différentiel entrainé par la couronne et deux arbres de sortie du différentiel, et
l'étape de calcul comprend un moyennage cyclique des vitesses instantanées des deux arbres de sortie pour détecter l'excentricité des lignes primitives de la couronne et du pignon.

14. Un procédé de détection selon la revendication 12 ou la revendication 13, dans lequel le moyen de mesure de la vitesse instantanée de l'une des roues dentées la plus lente produit au moins 256 impulsions par tour et la rotation de celle-ci est effectuée sur au moins dix tours.

15. Un procédé de détection selon la revendication 12, la revendication 13 ou la revendication 14, dans lequel le moyen de calcul est apte à exécuter une transformation et une analyse d'ordre sur les vitesses de rotation instantanées.

16. Un procédé de détection selon la revendication 15, dans lequel le moyen de calcul est apte à effectuer un test GO/NOGO en fonction de la taille des pics dans l'analyse d'ordre, indiquant GO si le pic est plus petit qu'un seuil prédéterminé et NOGO si le pic est plus élevé que le seuil prédéterminé.

17. Un procédé de détection selon la revendication 16, dans lequel le moyen de calcul est apte à indiquer GO ou NOGO à l'égard des roues dentées individuelles du train conformément aux hauteurs des pics individuels survenant à des ordres prédéterminés.

18. Un procédé de détection selon l'une des revendications 12 à 17, dans lequel le procédé est exécuté après taillage en développante des roues dentées du train.

19. Un procédé de détection selon l'une des revendications 12 à 17, dans lequel le procédé est exécuté après rodage à la pierre des roues dentées du train.

20. Un procédé de détection selon l'une des revendications 12 à 17, dans lequel le procédé est exécuté après rectification des roues dentées du train.
